# EUROPEAN PATENT APPLICATION

(11) **EP 4 729 816 A1**
(43) Date of publication of application: **22.04.2026**
(21) Application number: 24823041.9
(22) Date of filing: 08.03.2024
(51) Int. Cl.: F16K 31/04, H02K 7/14

(54) **ELECTRIC VALVE AND VALVE DEVICE**

(30) Priority: 15.06.2023 JP 2023098626
(71) Applicant: Fujikoki Corporation, Tokyo 158-0082 (JP)
(72) Inventor: YOSHIDA, Tatsuya, Tokyo 158-0082 (JP); MANO, Hideo, Tokyo 158-0082 (JP)
(74) Representative: Ter Meer Steinmeister & Partner
(86) International application number: PCT/JP2024/008939
(87) International publication number: WO 2024/257418

(57) **Abstract**

[Object] To provide a motor-operated valve and a valve device that are capable of being disposed in a small space.

[Solution] A motor-operated valve 1 includes a valve body 10 that has a valve chamber 12 and a valve port 13, a rotor case 30 that has a circular cylindrical shape and is mounted on the valve body 10, a rotor 40 that has a circular cylindrical shape and is disposed inside the rotor case 30, a valve member 20 that moves in response to the rotation of the rotor 40, and a stator 90 that is disposed inside the rotor 40 and constitutes a stepping motor 98 together with the rotor 40.

## Description

The present invention relates to a motor-operated valve and a valve device.

### Background Art

Patent Literature 1 discloses an example of a motor-operated valve according to the related art. The motor-operated valve includes a valve body, a case, a rotor, a stator, and a housing. The case has a circular cylindrical shape and is joined to the valve body. The rotor is disposed inside the case. The stator has a circular cylindrical shape and is coaxially disposed outside the case. The rotor and the stator constitute a motor. The housing houses the case and the stator. The housing has a connector portion.

### Citation List

### Patent Literature

Patent Literature 1: Japanese Unexamined Patent Application Publication No. 2022-83453

### Summary of Invention

### Technical Problem

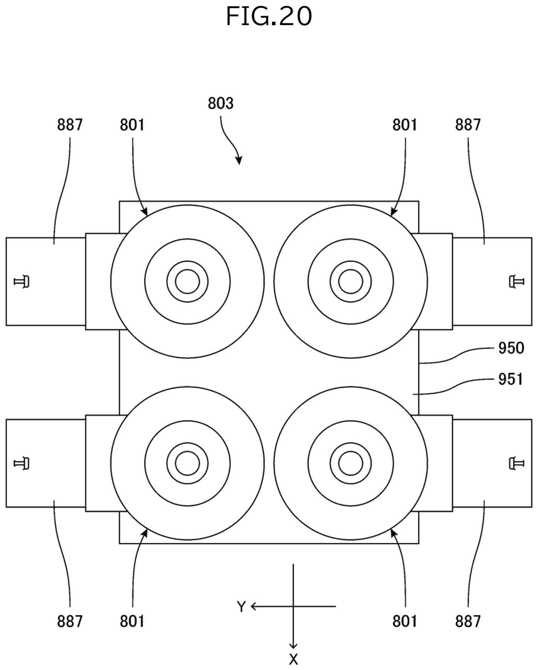

For example, the motor-operated valve disclosed in Patent Literature 1 is used in a valve device illustrated in Fig. 20. A valve device 803 includes a plurality of motor-operated valves 801 and a flow channel block 950. The flow channel block 950 has a rectangular parallelepiped shape and includes a mounting surface 951 on which the motor-operated valves 801 are mounted. The motor-operated valves 801 each have a stator disposed outside a case and therefore has a large outer diameter. Thus, a large space is required to place the motor-operated valve 801. Therefore, a relatively large mounting surface 951 is required in the flow channel block 950. Additionally, connector portions 887 of some of the motor-operated valves 801 face forward (leftward in Fig. 20) and connector portions 887 of the others of the motor-operated valves 801 face rearward (rightward in Fig. 20). Therefore, in a system incorporating the valve device 803, a space is required around the motor-operated valves 801 to route cables to be connected to the connector portions 887.

Accordingly, it is an object of the present invention to provide a motor-operated valve and a valve device that are capable of being disposed in a small space.

### Solution to Problem

To achieve the object above, a motor-operated valve according to an aspect of the present invention includes: a rotor case that has a cylindrical shape; a magnet rotor that has a circular cylindrical shape and is disposed inside the rotor case; a valve member that moves in response to rotation of the magnet rotor; and a stator that is disposed inside the magnet rotor and constitutes a motor together with the magnet rotor.

In the present invention, preferably, the motor-operated valve further includes an inner case that integrally includes a peripheral wall portion having a circular cylindrical shape, a bottom wall portion having a disc shape and connected to a first end of the peripheral wall portion, and an annular portion having an inner peripheral edge connected to a second end of the peripheral wall portion. Preferably, the annular portion has an outer peripheral edge joined to one end of the rotor case. Preferably, the peripheral wall portion and the bottom wall portion are disposed inside the magnet rotor. Preferably, the stator is disposed inside the peripheral wall portion.

In the present invention, preferably, the motor-operated valve further includes a housing made of a synthetic resin. Preferably, the housing includes a supporting portion having a circular columnar shape in which the stator is embedded. Preferably, the supporting portion is fitted into the inner case.

In the present invention, preferably, the housing further includes a connector portion having a cylindrical shape. Preferably, the connector portion extends in an axial direction of the magnet rotor.

In the present invention, preferably, the stator includes a laminated core that is disposed coaxially with the magnet rotor and has multiple pole portions that extend radially, and multiple coils that are disposed on the pole portions.

In the present invention, preferably, the motor-operated valve further includes a magnetic sensor configured to detect magnetism of the magnet rotor. Preferably, the magnetic sensor is disposed between one of the pole portions and another of the pole portions in the supporting portion.

In the present invention, preferably, the motor-operated valve further includes a driving shaft that rotates together with the magnet rotor. Preferably, the valve member has an internal thread and the driving shaft has an external thread that is screwed into the internal thread, or the driving shaft has an internal thread and the valve member has an external thread that is screwed into the internal thread. Preferably, the internal thread and the external thread constitute a screw-feed mechanism for moving the valve member.

To achieve the object above, a valve device according to another aspect of the present invention includes: at least one motor-operated valve; and a flow channel block including a mounting surface on which the at least one motor-operated valve is mounted. The at least one motor-operated valve includes: a rotor case that has a cylindrical shape; a magnet rotor that has a circular cylindrical shape and is disposed inside the rotor case; a valve member that moves in response to rotation of the magnet rotor; and a stator that is disposed inside the magnet rotor and constitutes a motor together with the magnet rotor. Advantageous Effects of Invention

According to the present invention, the magnet rotor has the circular cylindrical shape, and the stator is disposed inside the magnet rotor and constitutes the motor together with the magnet rotor. With this configuration, the motor-operated valve has a smaller outer diameter than that with a configuration in which a stator is disposed outside a magnet rotor. Therefore, the motor-operated valve can be disposed in a relatively small space.

### Brief Description of Drawings

[Fig. 1] Fig. 1 is a front view of a motor-operated valve according to a first embodiment of the present invention.
[Fig. 2] Fig. 2 is a plan view of the motor-operated valve.
[Fig. 3] Fig. 3 is a bottom view of the motor-operated valve.
[Fig. 4] Fig. 4 is a sectional view taken along line IV-IV of Fig. 1.
[Fig. 5] Fig. 5 is a sectional view taken along line V-V of Fig. 4.
[Fig. 6] Fig. 6 is a sectional view of a valve body assembly of the motor-operated valve.
[Fig. 7] Fig. 7 is a front view of a stator unit of the motor-operated valve.
[Fig. 8] Fig. 8 is a back view of the stator unit.
[Fig. 9] Fig. 9 is a bottom view of the stator unit.
[Fig. 10] Fig. 10 is a sectional view taken along line X-X of Fig. 7.
[Fig. 11] Fig. 11 is a sectional view taken along line XI-XI of Fig. 10.
[Fig. 12] Fig. 12 is a back view of a stator of the stator unit.
[Fig. 13] Fig. 13 is a plan view of the stator.
[Fig. 14] Fig. 14 is a bottom view of the stator.
[Fig. 15] Fig. 15 is a sectional view taken along line XV-XV of Fig. 12.
[Fig. 16] Fig. 16 is a sectional view taken along line XVI-XVI of Fig. 15.
[Fig. 17] Fig. 17 is a sectional view taken along line XVII-XVII of Fig. 15.
[Fig. 18] Fig. 18 is a sectional view of a valve device according to a second embodiment of the present invention.
[Fig. 19] Fig. 19 is a plan view of a valve device according to a third embodiment of the present invention.
[Fig. 20] Fig. 20 is a plan view of a valve device according to the related art.

### Description of Embodiments

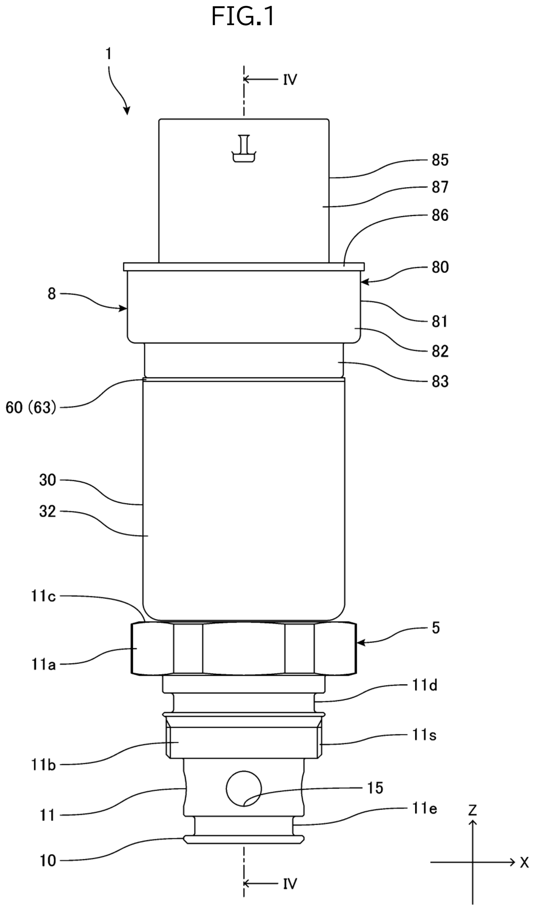

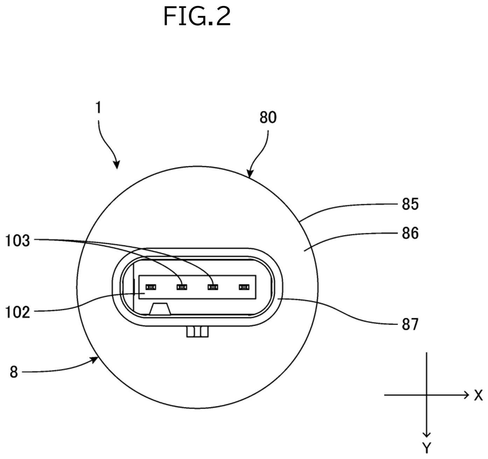

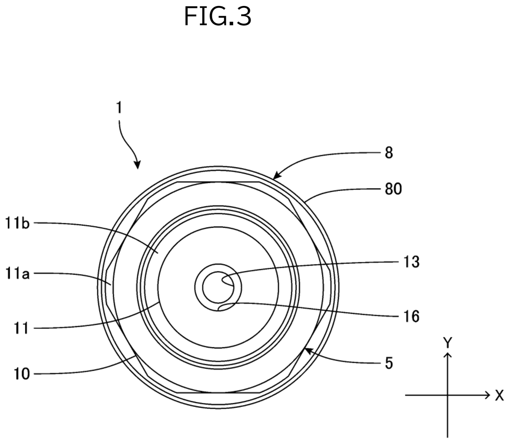

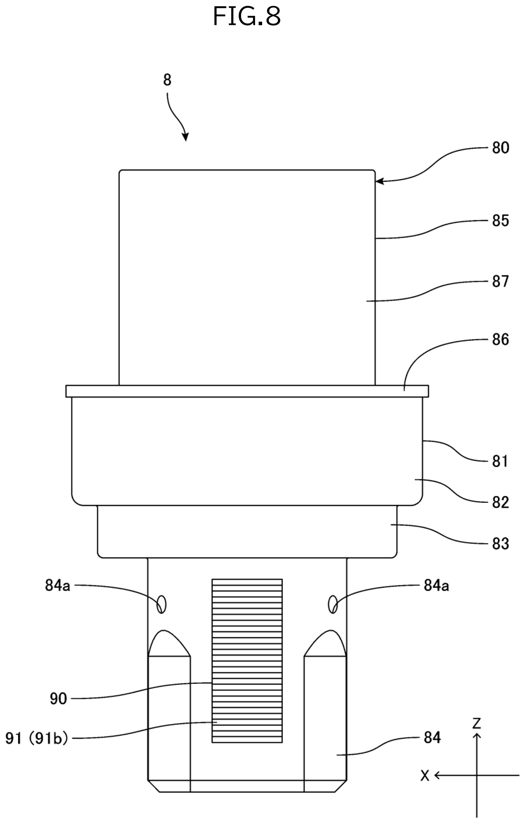

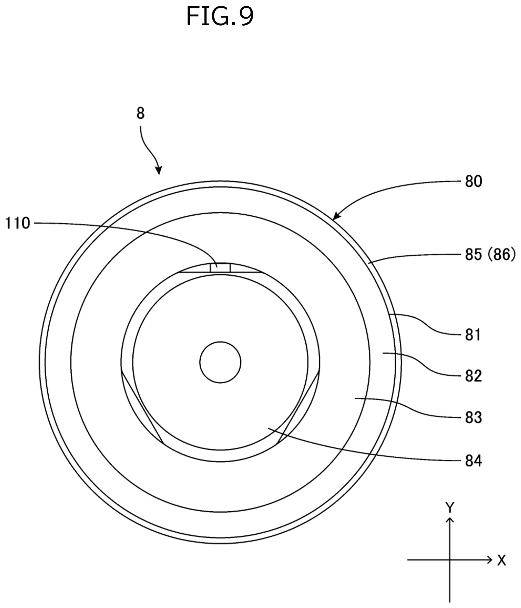

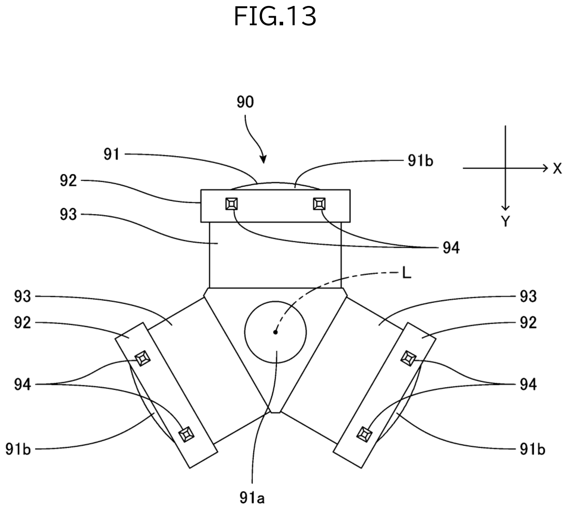

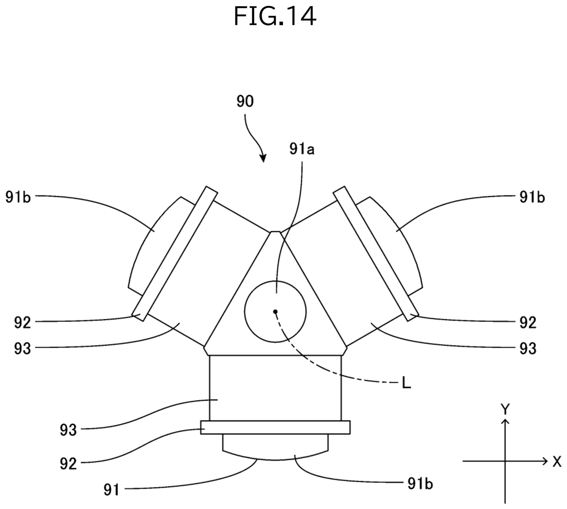

A motor-operated valve according to a first embodiment of the present invention is described below with reference to Figs. 1 to 17. The motor-operated valve according to the embodiment is used, for example, to control the flow rate of refrigerant in an automotive air conditioner.

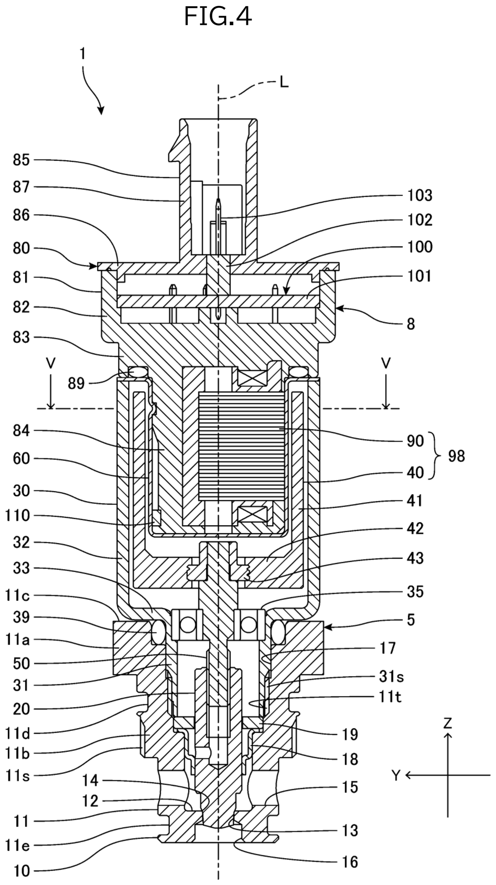

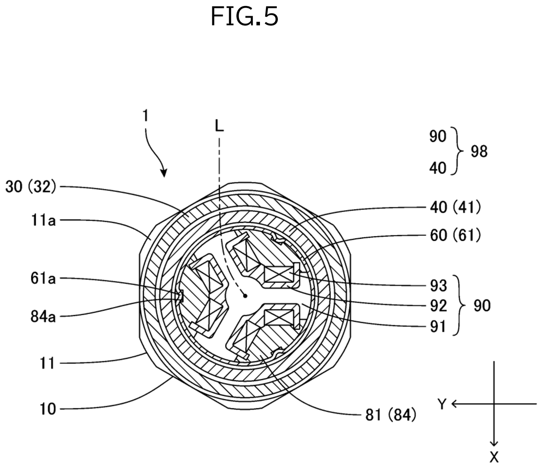

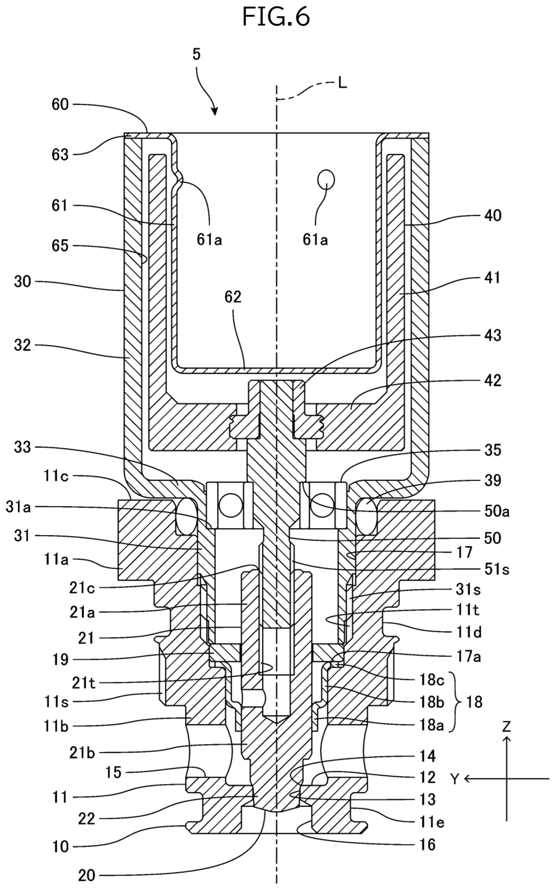

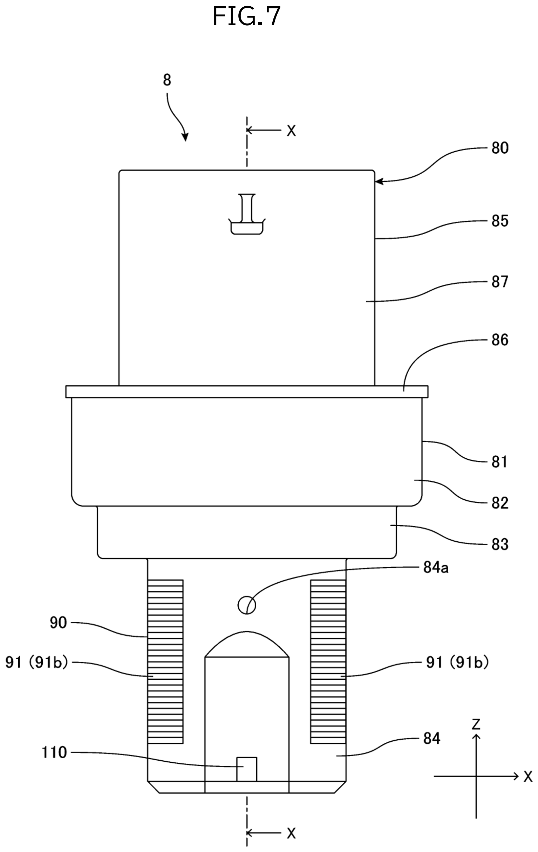

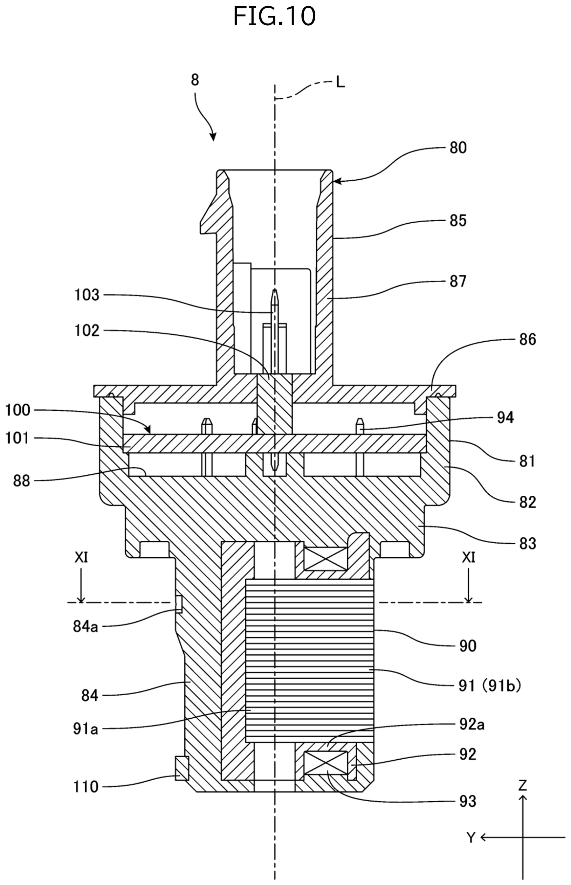

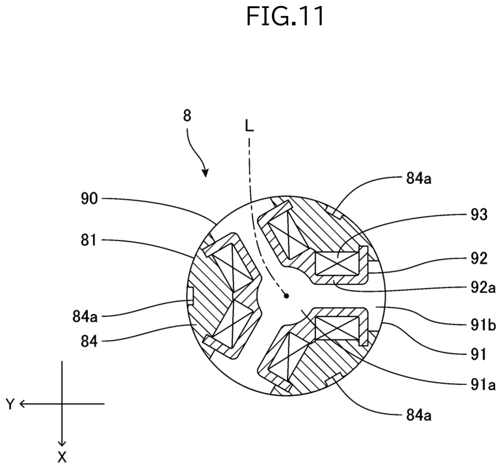

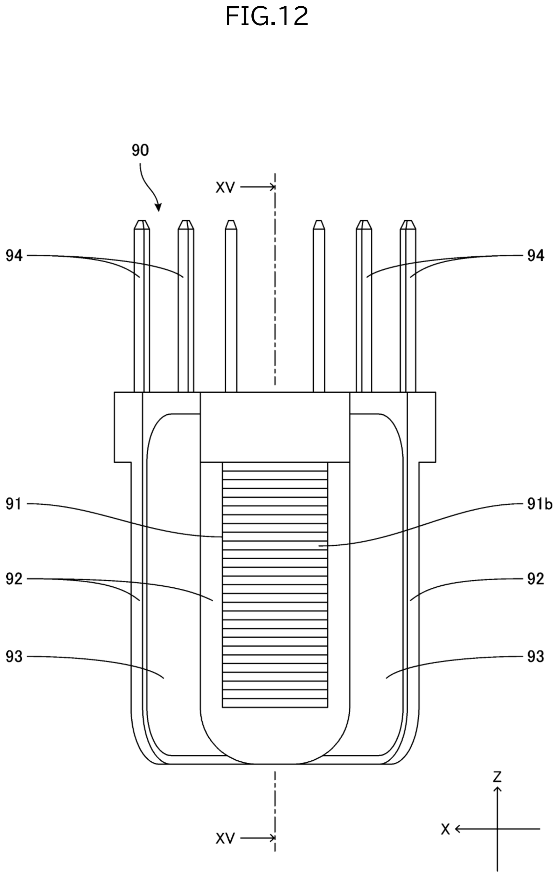

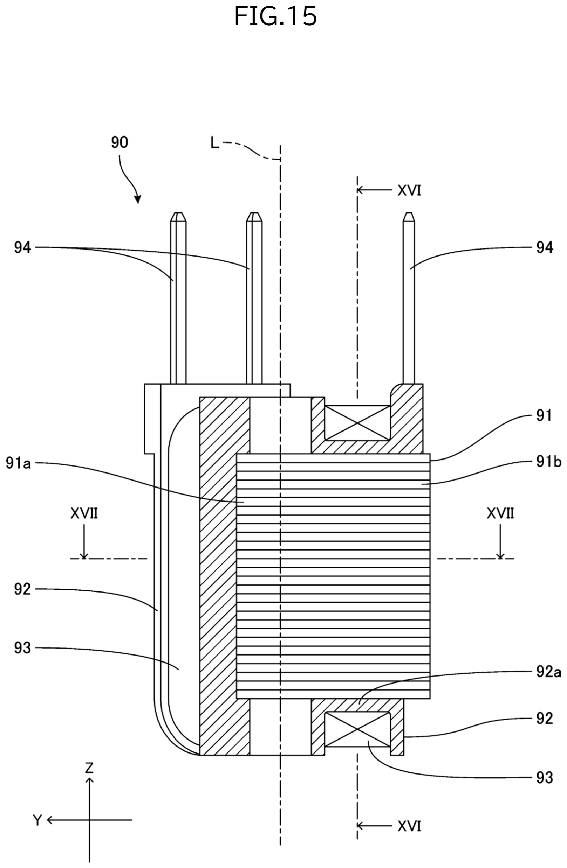

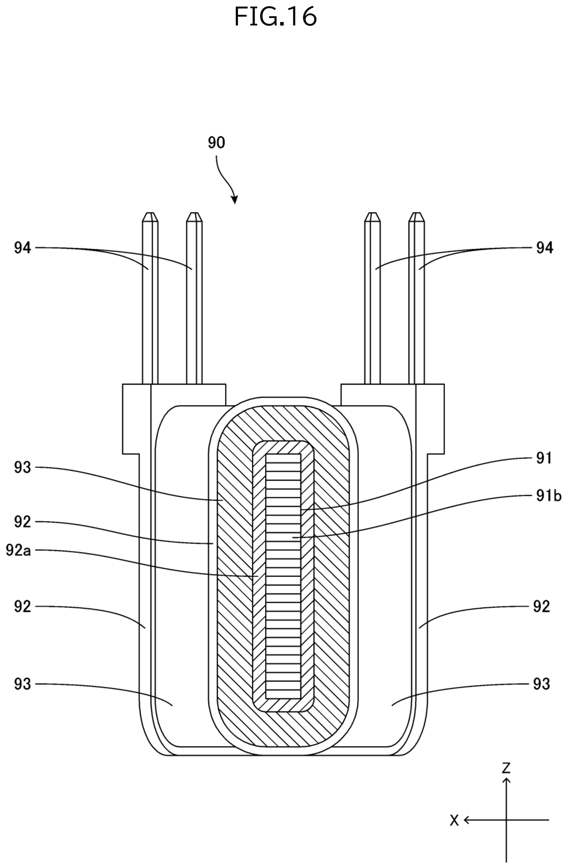

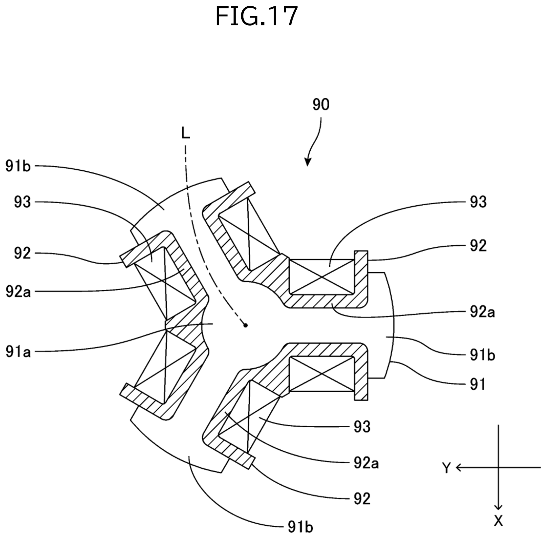

Figs. 1, 2, and 3 are a front view, a plan view, and a bottom view of the motor-operated valve according to the first embodiment of the present invention. Fig. 4 is a sectional view taken along line IV-IV of Fig. 1. Fig. 5 is a sectional view taken along line V-V of Fig. 4. Fig. 6 is a sectional view of a valve body assembly of the motor-operated valve. Figs. 7, 8, and 9 are a front view, a back view, and a bottom view of a stator unit of the motor-operated valve. Fig. 10 is a sectional view taken along line X-X of Fig. 7. Fig. 11 is a sectional view taken along line XI-XI of Fig. 10. Figs. 12, 13, and 14 are a back view, a plan view, and a bottom view of a stator of the stator unit. Fig. 15 is a sectional view taken along line XV-XV of Fig. 12. Fig. 16 is a sectional view taken along line XVI-XVI of Fig. 15. Fig. 17 is a sectional view taken along line XVII-XVII of Fig. 15. In each figure, an X direction indicated by arrow X represents a left-and-right direction, a Y direction indicated by arrow Y represents a front-and-back direction, and a Z direction indicated by arrow Z represents an up-and-down direction (a direction of an axis L). The direction indicated by arrow with the letter "X" is the right direction, the direction indicated by arrow with the letter "Y" is the front direction, and the direction indicated by arrow with the letter "Z" is the upward direction.

As illustrated in Figs. 1 to 5, a motor-operated valve 1 according to the first embodiment includes a valve body assembly 5 and a stator unit 8.

As illustrated in Fig. 6, the valve body assembly 5 includes a valve body 10, a valve member 20, a rotor case 30, a bearing 35, a rotor 40, a driving shaft 50, and an inner case 60.

The valve body 10 includes a body member 11, a sleeve 18, and a valve-member supporting plate 19.

For example, the body member 11 is made of a metal, such as an aluminum alloy. The outer contour of a cross section of an upper part 11a of the body member 11 is hexagonal. The term "cross section" refers to a section perpendicular to the axis L. The body member 11 has a valve chamber 12, a valve port 13, a valve seat 14, a first connecting passage 15, a second connecting passage 16, and a mounting hole 17.

The valve port 13 is connected to the valve chamber 12. The valve port 13 is enclosed by the valve seat 14 in the valve chamber 12. The first connecting passage 15 extends from the valve chamber 12 in the left-and-right and front-and-back directions. The second connecting passage 16 extends downward from the valve port 13.

The mounting hole 17 is provided in an upper surface 11c of the body member 11. The mounting hole 17 is connected to the valve chamber 12. The body member 11 has a holding surface 17a that is an annular flat surface facing upward. The holding surface 17a is provided at a part where the mounting hole 17 is connected to the valve chamber 12. The body member 11 has an external thread 11s and an internal thread 11t. The external thread 11s is provided on the outer circumferential surface of a lower part 11b of the body member 11. The internal thread 11t is provided on the inner circumferential surface of the mounting hole 17. The body member 11 has annular grooves 11d and 11e. The annular groove 11d is provided on the outer circumferential surface of the lower part 11b of the body member 11, above the external thread 11s. The annular groove 11e is provided on the outer circumferential surface of the lower part 11b of the body member 11, below the first connecting passage 15. O-rings are disposed in the annular grooves 11d and 11e.

The sleeve 18 is made of a synthetic resin or a metal. The sleeve 18 has a generally circular cylindrical shape. The sleeve 18 integrally includes a small-diameter portion 18a, a large-diameter portion 18b, and a flange portion 18c.

The small-diameter portion 18a and the large-diameter portion 18b each have a circular cylindrical shape. The inner diameter of the large-diameter portion 18b is greater than the outer diameter of the small-diameter portion 18a. The lower end of the large-diameter portion 18b is coaxially connected to the upper end of the small-diameter portion 18a. The flange portion 18c has a circular annular plate-like shape. The inner peripheral edge of the flange portion 18c is connected to the upper end of the large-diameter portion 18b. The small-diameter portion 18a and the large-diameter portion 18b are disposed in the valve chamber 12. The flange portion 18c is in contact with the holding surface 17a of the body member 11.

The valve-member supporting plate 19 is made of a synthetic resin or a metal. The valve-member supporting plate 19 has a circular annular plate-like shape. The valve-member supporting plate 19 has a circular outer peripheral edge and a square inner peripheral edge. The valve-member supporting plate 19 is disposed in the mounting hole 17, and the lower surface of the valve-member supporting plate 19 is in contact with the flange portion 18c of the sleeve 18.

The valve member 20 is made of a synthetic resin or a metal. The valve member 20 integrally includes a stem portion 21 and a plug portion 22.

The stem portion 21 has a generally columnar shape. The stem portion 21 has an upper part 21a that has a rectangular columnar shape. The outer contour of a cross section of the upper part 21a is square and matches the inner peripheral edge of the valve-member supporting plate 19. The stem portion 21 has a lower part 21b that has a circular columnar shape. The outer diameter of the lower part 21b is equal to the inner diameter of the small-diameter portion 18a of the sleeve 18. The stem portion 21 has a thread hole 21c and an internal thread 21t. The thread hole 21c is provided in the upper end surface of the stem portion 21. The internal thread 21t is provided on the inner circumferential surface of the thread hole 21c.

The upper part 21a of the stem portion 21 is disposed in the valve-member supporting plate 19. The lower part 21b of the stem portion 21 is disposed in the small-diameter portion 18a of the sleeve 18. The valve member 20 is supported by the sleeve 18 and the valve-member supporting plate 19 and is movable in the up-and-down direction (the direction of the axis L). The rotation of the valve member 20 about the axis L is restricted by the valve-member supporting plate 19. The upper part 21a of the stem portion 21 and the inner peripheral edge of the valve-member supporting plate 19 may each have any shape as long as they restrict rotation of the valve member 20 about the axis L.

The plug portion 22 has a truncated conical shape with a diameter decreasing from top to bottom. The plug portion 22 is coaxially connected to the lower end of the stem portion 21. The plug portion 22 is disposed in the valve chamber 12 and the valve port 13. The plug portion 22 faces the valve port 13 and the valve seat 14 in the up-and-down direction. When the plug portion 22 comes into contact with the valve seat 14, the valve port 13 is closed. When the plug portion 22 is separated from the valve seat 14, the valve port 13 is open, and a throttle channel is formed between the plug portion 22 and the valve port 13.

For example, the rotor case 30 is made of a metal, such as nonmagnetic stainless steel. In this specification, the term "nonmagnetic" refers to a characteristic of not being magnetized or not being substantially magnetized, even when placed in a magnetic field. The rotor case 30 may be made of a synthetic resin. The rotor case 30 has a generally circular cylindrical shape. The rotor case 30 integrally includes a first part 31, a second part 32, and a connecting part 33.

The first part 31 has a circular cylindrical shape. The first part 31 has an external thread 31s. The external thread 31s is provided on the lower part of the outer circumferential surface of the first part 31. The first part 31 is disposed in the mounting hole 17 of the body member 11, and the external thread 31s of the first part 31 is screwed into the internal thread 11t of the body member 11. The first part 31 (i.e., the rotor case 30) is mounted on the body member 11 by a threaded structure. In the mounting hole 17, an O-ring 39 seals a gap between the body member 11 and the first part 31. The flange portion 18c of the sleeve 18 and the valve-member supporting plate 19 are held between the lower end of the first part 31 and the holding surface 17a of the body member 11. The first part 31 has a bearing mounting surface 31a that is an annular flat surface facing upward. The bearing mounting surface 31a is formed on the inner circumferential surface of the first part 31.

The second part 32 has a circular cylindrical shape. The inner diameter of the second part 32 is greater than the outer diameter of the first part 31. The connecting part 33 has a circular annular flat plate-like shape. The inner peripheral edge of the connecting part 33 is connected to the upper end of the first part 31, and the outer peripheral edge of the connecting part 33 is connected to the lower end of the second part 32.

The bearing 35 is, for example, a radial ball bearing. The bearing 35 is disposed inside the first part 31. The lower end of the outer ring of the bearing 35 is in contact with the bearing mounting surface 31a. The bearing 35 may be a thrust ball bearing.

The rotor 40 has a generally circular cylindrical shape. The rotor 40 is disposed inside the second part 32 of the rotor case 30. The rotor 40 integrally includes a circular cylindrical portion 41, a disc portion 42, and a coupling portion 43.

The circular cylindrical portion 41 has a plurality of north (N) poles and a plurality of south (S) poles. The N poles and the S poles are alternately arranged one after another on the inner circumferential surface of the circular cylindrical portion 41 at regular angular intervals in the circumferential direction. The N poles and the S poles each extend in the up-and-down direction. The circular cylindrical portion 41 has, for example, five N poles and five S poles. The disc portion 42 is connected to the lower end of the circular cylindrical portion 41. The coupling portion 43 has a circular cylindrical shape. The coupling portion 43 is disposed at the center of the disc portion 42 and is coaxial with the disc portion 42. The rotor 40 is a magnet rotor.

The driving shaft 50 is made of a synthetic resin or a metal. The driving shaft 50 has a generally circular columnar shape. The driving shaft 50 has an external thread 51s. The external thread 51s is provided on the outer circumferential surface of the lower part of the driving shaft 50. The external thread 51s is screwed into the internal thread 21t of the valve member 20. The driving shaft 50 may have an internal thread, and the valve member 20 may have an external thread. The internal thread 21t and the external thread 51s constitute a screw-feed mechanism for moving the valve member 20 in the up-and-down direction. The central part of the driving shaft 50 is supported by the bearing 35 so that the driving shaft 50 is rotatable. The driving shaft 50 has a supporting surface 50a that is an annular flat surface facing downward. The upper end of the inner ring of the bearing 35 is in contact with the supporting surface 50a. The upper part of the driving shaft 50 is fitted into the coupling portion 43. The driving shaft 50 rotates together with the rotor 40.

For example, the inner case 60 is made of a metal, such as nonmagnetic stainless steel. The inner case 60 may be made of a synthetic resin. The inner case 60 integrally includes a peripheral wall portion 61, a bottom wall portion 62, and an annular portion 63.

The peripheral wall portion 61 has a circular cylindrical shape. The peripheral wall portion 61 has a plurality of projections 61a. The projections 61a are provided in the upper part of the inner circumferential surface of the peripheral wall portion 61. The bottom wall portion 62 has a disc shape. The outer peripheral edge of the bottom wall portion 62 is connected to the lower end (a first end) of the peripheral wall portion 61. The annular portion 63 has a circular annular plate-like shape. The inner peripheral edge of the annular portion 63 is connected to the upper end (a second end) of the peripheral wall portion 61. The outer peripheral edge of the annular portion 63 is joined to the upper end (one end) of the second part 32 of the rotor case 30 over the entire circumference. The peripheral wall portion 61 and the bottom wall portion 62 are disposed inside the rotor 40. The second part 32 of the rotor case 30 and the inner case 60 define a rotor space 65. The rotor 40 is disposed in the rotor space 65. The rotor space 65 is sealed from the exterior of the motor-operated valve 1. The rotor space 65 is connected to the valve chamber 12 through a gap. Refrigerant in the valve chamber 12 is introduced into the rotor space 65.

As illustrated in Figs. 7 to 11, the stator unit 8 includes a housing 80, a stator 90, a control device 100, and a magnetic sensor 110.

The housing 80 is made of a synthetic resin. The housing 80 includes a housing body 81 and a cover member 85.

The housing body 81 integrally includes a peripheral wall portion 82, a bottom wall portion 83, and a supporting portion 84. The peripheral wall portion 82 has a circular cylindrical shape. The bottom wall portion 83 has a disc shape. The bottom wall portion 83 is connected to the lower end of the peripheral wall portion 82. The supporting portion 84 has a circular columnar shape. The supporting portion 84 is coaxially connected to the lower surface of the bottom wall portion 83. The outer diameter of the supporting portion 84 is equal to the inner diameter of the peripheral wall portion 61 of the inner case 60. The supporting portion 84 has a plurality of recesses 84a. The recesses 84a are provided in the upper part of the outer circumferential surface of the supporting portion 84. The supporting portion 84 is disposed in the inner case 60, and the projections 61a of the inner case 60 are fitted into the recesses 84a. The supporting portion 84 is fitted into the inner case 60. An O-ring 89 seals a gap between the bottom wall portion 83 and the annular portion 63 of the inner case 60.

The cover member 85 integrally includes a cover portion 86 and a connector portion 87. The cover portion 86 has a disc shape. The outer peripheral edge of the cover portion 86 is joined to the upper end of the peripheral wall portion 82. The connector portion 87 has an elliptical cylindrical shape. The connector portion 87 extends upward from the center of the upper surface of the cover portion 86. The peripheral wall portion 82, the bottom wall portion 83, and the cover portion 86 define a control device space 88.

As illustrated in Figs. 12 to 17, the stator 90 includes a laminated core 91, a bobbin 92, multiple coils 93, and multiple coil terminals 94.

The laminated core 91 integrally includes a central portion 91a and multiple pole portions 91b. The central portion 91a has a circular columnar shape. The central portion 91a is disposed coaxially with the rotor 40. The pole portions 91b extend radially (in a direction perpendicular to the axis L) from the central portion 91a. The pole portions 91b are arranged on the outer circumferential surface of the central portion 91a at regular angular intervals in the circumferential direction. The laminated core 91 has, for example, three pole portions 91b. The laminated core 91 is formed by stacking multiple thin electromagnetic steel sheets. Insulating films are formed on the surfaces of the electromagnetic steel sheets. The electromagnetic steel sheets are disposed along a direction in which the pole portions 91b extend.

The bobbin 92 is made of a synthetic resin. The bobbin 92 includes multiple sleeve portions 92a that cover the pole portions 91b. The pole portions 91b are disposed in the sleeve portions 92a. The pole portions 91b extend through the sleeve portions 92a. The coils 93 are wires that are wound around the sleeve portions 92a of the bobbin 92. The coils 93 are provided on the pole portions 91b. The coil terminals 94 extend upward from the bobbin 92. The coil terminals 94 are electrically connected to the coils 93.

The stator 90 is embedded in the supporting portion 84 of the housing 80. The stator 90, together with the supporting portion 84 of the housing 80, is disposed inside the peripheral wall portion 61 of the inner case 60. The rotor 40 is disposed outside the peripheral wall portion 61. The rotor 40 and the stator 90 constitute a stepping motor 98. The motor-operated valve 1 may include a motor of another type, such as a brushless DC motor.

The control device 100 is disposed in the control device space 88. The control device 100 includes a circuit board 101, a terminal component 102, and a computer that is not illustrated. The circuit board 101 is a printed circuit board on which electronic components including the computer are mounted. The coil terminals 94 of the stator 90 are connected to the circuit board 101. The terminal component 102 includes multiple connector terminals 103. One end of each of the connector terminals 103 is connected to the circuit board 101, and the other end is disposed inside the connector portion 87. The computer is configured to control the motor-operated valve 1.

The magnetic sensor 110 is a sensor including a Hall element that outputs a signal, which is a digital signal, corresponding to the direction of a magnetic field. The magnetic sensor 110 is disposed on the lower part of the supporting portion 84 of the housing 80. The magnetic sensor 110 is disposed between two of the pole portions 91b adjacent to each other in the supporting portion 84. The magnetic sensor 110 radially faces the poles (the N poles and the S poles) of the rotor 40 with the peripheral wall portion 61 of the inner case 60 in between. The magnetic sensor 110 is configured to detect the magnetism of the rotor 40. The magnetic sensor 110 is electrically connected to the circuit board 101, and the computer is configured to detect the rotational position of the rotor 40 based on the signal from the magnetic sensor 110.

In the motor-operated valve 1, the respective central axes of the body member 11 (the valve chamber 12, the valve port 13, the valve seat 14, and the mounting hole 17), the sleeve 18, the valve-member supporting plate 19, the valve member 20, the rotor case 30, the bearing 35, the rotor 40, the driving shaft 50, the inner case 60, the housing body 81, the cover member 85 (the cover portion 86 and the connector portion 87), and the stator 90 are aligned with the axis L.

An operation of the motor-operated valve 1 is described below.

In the motor-operated valve 1, currents are supplied to the coils 93 of the stator 90 to rotate the rotor 40 in a first direction. The driving shaft 50 rotates together with the rotor 40. A screw-feed action of the external thread 51s of the driving shaft 50 and the internal thread 21t of the valve member 20 moves the valve member 20 downward, thereby decreasing the opening area of the valve port 13 (the throttle channel). When the valve member 20 comes into contact with the valve seat 14 and the valve port 13 is closed, the motor-operated valve 1 enters a fully closed state.

In the motor-operated valve 1, currents are supplied to the coils 93 of the stator 90 to rotate the rotor 40 in a second direction. The driving shaft 50 rotates together with the rotor 40. The screw-feed action of the external thread 51s of the driving shaft 50 and the internal thread 21t of the valve member 20 moves the valve member 20 upward, thereby increasing the opening area of the valve port 13. When the valve member 20 is positioned farthest from the valve port 13, the motor-operated valve 1 enters a fully open state. When the motor-operated valve 1 is in the fully open state, the opening area of the valve port 13 reaches its maximum.

A method for manufacturing the motor-operated valve 1 is described below.

The sleeve 18 and the valve-member supporting plate 19 are disposed in the mounting hole 17 of the body member 11. The rotor case 30 (the first part 31) is inserted into the mounting hole 17 of the body member 11 while being rotated, and is thereby mounted on the body member 11. The sleeve 18 and the valve-member supporting plate 19 are held by the body member 11 and the rotor case 30. The valve member 20 is inserted into the valve-member supporting plate 19 and the sleeve 18. The bearing 35 is fitted into the first part 31 of the rotor case 30. The upper part of the driving shaft 50 is fitted into the coupling portion 43 of the rotor 40. The driving shaft 50 is inserted into the bearing 35, and the external thread 51s of the driving shaft 50 is screwed into the internal thread 21t of the valve member 20. The central part of the driving shaft 50 is fitted into the bearing 35. The peripheral wall portion 61 and the bottom wall portion 62 of the inner case 60 are inserted into the rotor 40, and the annular portion 63 of the inner case 60 is welded to the upper end of the rotor case 30 (the second part 32). In this way, the valve body assembly 5 is manufactured.

The laminated core 91 is placed in a stator mold, and the bobbin 92 is injection molded integrally with the laminated core 91. Wires are wound around the sleeve portions 92a of the bobbin 92 to form the coils 93 on the pole portions 91b of the laminated core 91. In this way, the stator 90 is manufactured.

The stator 90 is placed in a housing body mold, and the housing body 81 is injection molded integrally with the stator 90. The magnetic sensor 110 is mounted on the supporting portion 84 of the housing body 81. Wires for electrically connecting the magnetic sensor 110 and the circuit board 101 are embedded in the housing body 81. The wires are not illustrated. The cover member 85 is injection molded using a cover member mold. The control device 100 is placed inside the peripheral wall portion 82 of the housing body 81, and the outer peripheral edge of the cover portion 86 of the cover member 85 is bonded to the upper end of the peripheral wall portion 82 by ultrasonic welding or infrared welding. In this way, the stator unit 8 is manufactured.

The supporting portion 84 of the stator unit 8 is inserted into the inner case 60 of the valve body assembly 5, and is thereby fitted into the inner case 60. The projections 61a of the inner case 60 are fitted into the recesses 84a of the supporting portion 84, thereby securing the stator unit 8 to the valve body assembly 5. As a result, the motor-operated valve 1 is completed.

As described above, the motor-operated valve 1 includes: the rotor case 30 that has the circular cylindrical shape; the rotor 40 that has the circular cylindrical shape and is disposed inside the rotor case 30; the valve member 20 that moves in response to the rotation of the rotor 40; and the stator 90 that is disposed inside the rotor 40 and constitutes the stepping motor 98 together with the rotor 40. With this configuration, the motor-operated valve 1 has a smaller outer diameter than that with a configuration in which a stator is disposed outside a rotor. Therefore, the motor-operated valve 1 can be disposed in a relatively small space.

The motor-operated valve 1 includes the inner case 60. The inner case 60 integrally includes the peripheral wall portion 61 having the circular cylindrical shape, the bottom wall portion 62 having the disc shape and connected to the lower end of the peripheral wall portion 61, and the annular portion 63 having the inner peripheral edge connected to the upper end of the peripheral wall portion 61. The annular portion 63 has the outer peripheral edge joined to the upper end of the rotor case 30. The peripheral wall portion 61 and the bottom wall portion 62 are disposed inside the rotor 40. The stator 90 is disposed inside the peripheral wall portion 61. With this configuration, the rotor case 30 and the inner case 60 define the rotor space 65 in which the rotor 40 is disposed. Refrigerant is introduced into the rotor space 65. The rotor space 65 is sealed from a space inside the peripheral wall portion 61 in which the stator 90 is disposed. Therefore, the space in which the stator 90 is disposed can be separated from the rotor space 65.

The motor-operated valve 1 includes the housing 80 made of a synthetic resin. The housing 80 includes the supporting portion 84 having the circular columnar shape in which the stator 90 is embedded. The supporting portion 84 is fitted into the inner case 60. With this configuration, the stator 90 is protected by the supporting portion 84. By fitting the supporting portion 84 into the inner case 60, the stator 90 can be appropriately disposed inside the inner case 60.

The housing 80 includes the connector portion 87 having the elliptical cylindrical shape. The connector portion 87 extends in the axial direction (the direction of the axis L) of the rotor 40. With this configuration, the mounting area of the motor-operated valve 1, which is an area viewed in the direction of the axis L, can be reduced.

The stator 90 includes the laminated core 91 that is disposed coaxially with the rotor 40 and has the pole portions 91b that extend radially, and the coils 93 that are disposed on the pole portions 91b. The electromagnetic steel sheets of the laminated core 91 are disposed along the direction in which the pole portions 91b extend (the direction perpendicular to the axis L). In the laminated core 91, magnetic flux flows along the direction in which the pole portions 91b extend, and currents flowing across the electromagnetic steel sheets are restricted. Therefore, iron loss in the laminated core 91 can be reduced.

The motor-operated valve 1 includes the magnetic sensor 110 configured to detect the magnetism of the rotor 40. The magnetic sensor 110 is disposed between one of the pole portions 91b and another of the pole portions 91b in the supporting portion 84 (Fig. 7). With this configuration, the magnetic sensor 110 is disposed near the rotor 40 and radially faces the rotor 40.

The motor-operated valve 1 includes the driving shaft 50 that rotates together with the rotor 40. The valve member 20 has the internal thread 21t. The driving shaft 50 has the external thread 51s that is screwed into the internal thread 21t. The internal thread 21t and the external thread 51s constitute the screw-feed mechanism for moving the valve member 20. With this configuration, the valve member 20 can be moved with a relatively simple configuration.

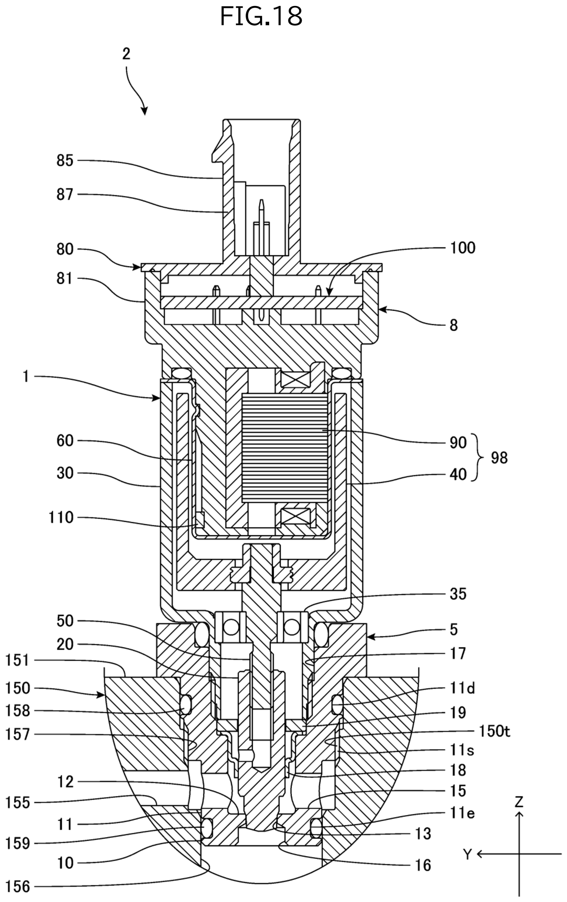

A valve device according to a second embodiment of the present invention is described below with reference to Fig. 18.

As illustrated in Fig. 18, a valve device 2 according to the second embodiment includes the motor-operated valve 1 according to the first embodiment and a flow channel block 150.

The flow channel block 150 has a rectangular parallelepiped shape. For example, the flow channel block 150 is made of a metal, such as an aluminum alloy. The upper surface of the flow channel block 150 serves as a mounting surface 151 on which the motor-operated valve 1 is mounted.

The flow channel block 150 has a first passage 155, a second passage 156, and a mounting hole 157. The mounting hole 157 is provided in the mounting surface 151. The first passage 155 extends forward from the mounting hole 157. The second passage 156 extends downward from the mounting hole 157.

The flow channel block 150 has an internal thread 150t. The internal thread 150t is provided on the inner circumferential surface of the mounting hole 157. The lower part 11b of the body member 11 of the motor-operated valve 1 is disposed in the mounting hole 157, and the external thread 11s of the body member 11 is screwed into the internal thread 150t of the flow channel block 150. The motor-operated valve 1 is rotated about the axis L by a jig attached to the hexagonal upper part 11a of the body member 11. As a result, the motor-operated valve 1 is mounted on the flow channel block 150 by a threaded structure. In the mounting hole 157, O-rings 158 and 159 are disposed in the annular grooves 11d and 11e and seal gaps between the body member 11 and the flow channel block 150. The connector portion 87 of the motor-operated valve 1 faces upward. The first passage 155 is connected to the valve chamber 12 of the motor-operated valve 1 via the mounting hole 157 and the first connecting passage 15. The second passage 156 is connected to the valve port 13 of the motor-operated valve 1 via the second connecting passage 16.

The valve device 2 may have a configuration in which the body member 11 of the motor-operated valve 1 is omitted and the rotor case 30 is directly mounted on the flow channel block 150. In this configuration, the flow channel block 150 has the same or substantially the same valve chamber, valve port, valve seat, and mounting hole as those of the motor-operated valve 1.

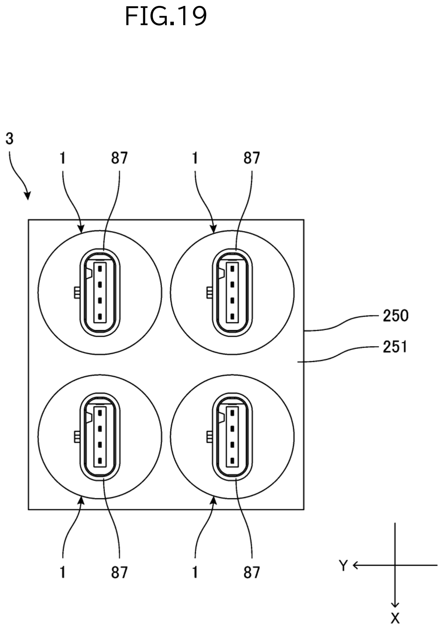

A valve device according to a third embodiment of the present invention is described below with reference to Fig. 19.

As illustrated in Fig. 19, a valve device 3 according to the second embodiment includes the motor-operated valves 1 according to the first embodiment and a flow channel block 250.

The flow channel block 250 has a rectangular parallelepiped shape. For example, the flow channel block 250 is made of a metal, such as an aluminum alloy. The upper surface of the flow channel block 250 serves as a mounting surface 251 on which the motor-operated valves 1 are mounted.

The flow channel block 250 has multiple mounting holes that are not illustrated. The mounting holes are provided in the mounting surface 251. Multiple internal threads are provided on the inner circumferential surfaces of the mounting holes. The lower parts 11b of the body members 11 of the motor-operated valves 1 are disposed in the mounting holes, and the external threads 11s of the body members 11 are screwed into the internal threads of the flow channel block 250. The connector portions 87 of the motor-operated valves 1 face upward.

The valve devices 2 and 3 have the same effects as those of the motor-operated valve 1.

In the valve device 3, the mounting areas of the respective motor-operated valves 1 are small, allowing the flow channel block 250 to be reduced in size. In the valve device 3, the connector portions 87 of the respective motor-operated valves 1 face the same direction (upward). Therefore, in a system incorporating the valve device 3, it is sufficient to provide a space only above the valve device 3 to route cables to be connected to the connector portions 87 of the motor-operated valves 1, so that the valve device 3 can be placed in a relatively small space.

In this specification, the terms indicating shapes, such as "circular cylindrical", "circular columnar", and "rectangular parallelepiped", are also used for members and portions of the members substantially having the shapes indicated by the terms. For example, "circular cylindrical member" includes a circular cylindrical member and a substantially circular cylindrical member.

The embodiments of the present invention are described above. The present invention, however, is not limited to configurations of these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

### Reference Signs List

1 ... motor-operated valve, 2 ... valve device, 3 ... valve device, 5 ... valve body assembly, 8 ... stator unit, 10 ... valve body, 11 ... body member, 11a ... upper part, 11b ... lower part, 11c ... upper surface, 11d ... annular groove, 11e ... annular groove, 11s ... external thread, 11t ... internal thread, 12 ... valve chamber, 13 ... valve port, 14 ... valve seat, 15 ... first connecting passage, 16 ... second connecting passage, 17 ... mounting hole, 17a ... holding surface, 18 ... sleeve, 18a ... small-diameter portion, 18b ... large-diameter portion, 18c ... flange portion, 19 ... valve-member supporting plate, 20 ... valve member, 21 ... stem portion, 21a ... upper part, 21b ... lower part, 21c ... thread hole, 21t ... internal thread, 22 ... plug portion, 30 ... rotor case, 31 ... first part, 31a ... bearing mounting surface, 31s ... external thread, 32 ... second part, 33 ... connecting part, 35 ... bearing, 39 ... O-ring, 40 ... rotor, 41 ... circular cylindrical portion, 42 ... disc portion, 43 ... coupling portion, 50 ... driving shaft, 50a ... supporting surface, 51s ... external thread, 60 ... inner case, 61 ... peripheral wall portion, 61a ... projection, 62 ... bottom wall portion, 63 ... annular portion, 65 ... rotor space, 80 ... housing, 81 ... housing body, 82 ... peripheral wall portion, 83 ... bottom wall portion, 84 ... supporting portion, 84a ... recess, 85 ... cover member, 86 ... cover portion, 87 ... connector portion, 88 ... control device space, 89 ... O-ring, 90 ... stator, 91 ... laminated core, 91a ... central portion, 91b ... pole portion, 92 ... bobbin, 92a ... sleeve portion, 93 ... coil, 94 ... coil terminal, 98 ... stepping motor, 100 ... control device, 101 ... circuit board, 102 ... terminal component, 103 ... connector terminal, 110 ... magnetic sensor, 150 ... flow channel block, 150t ... internal thread, 151 ... mounting surface, 155 ... first passage, 156 ... second passage, 157 ... mounting hole, 158 ... O-ring, 159 ... O-ring, 250 ... flow channel block, 251 ... mounting surface, L ... axis.

## Claims

1. A motor-operated valve comprising:
a rotor case that has a cylindrical shape;
a magnet rotor that has a circular cylindrical shape and is disposed inside the rotor case;
a valve member that moves in response to rotation of the magnet rotor; and
a stator that is disposed inside the magnet rotor and constitutes a motor together with the magnet rotor.

2. The motor-operated valve according to Claim 1 further comprising an inner case that integrally includes a peripheral wall portion having a circular cylindrical shape, a bottom wall portion having a disc shape and connected to a first end of the peripheral wall portion, and an annular portion having an inner peripheral edge connected to a second end of the peripheral wall portion,
wherein the annular portion has an outer peripheral edge joined to one end of the rotor case,
wherein the peripheral wall portion and the bottom wall portion are disposed inside the magnet rotor, and
wherein the stator is disposed inside the peripheral wall portion.

3. The motor-operated valve according to Claim 2 further comprising a housing made of a synthetic resin,
wherein the housing includes a supporting portion having a circular columnar shape in which the stator is embedded, and
wherein the supporting portion is fitted into the inner case.

4. The motor-operated valve according to Claim 3,
wherein the housing further includes a connector portion having a cylindrical shape, and
wherein the connector portion extends in an axial direction of the magnet rotor.

5. The motor-operated valve according to Claim 4, wherein the stator includes a laminated core that is disposed coaxially with the magnet rotor and has multiple pole portions that extend radially, and multiple coils that are disposed on the pole portions.

6. The motor-operated valve according to Claim 5 further comprising a magnetic sensor configured to detect magnetism of the magnet rotor,
wherein the magnetic sensor is disposed between one of the pole portions and another of the pole portions in the supporting portion.

7. The motor-operated valve according to Claim 1 further comprising a driving shaft that rotates together with the magnet rotor,
wherein the valve member has an internal thread and the driving shaft has an external thread that is screwed into the internal thread, or the driving shaft has an internal thread and the valve member has an external thread that is screwed into the internal thread, and
wherein the internal thread and the external thread constitute a screw-feed mechanism for moving the valve member.

8. A valve device comprising: at least one motor-operated valve; and a flow channel block including a mounting surface on which the at least one motor-operated valve is mounted,
wherein the at least one motor-operated valve includes:
a rotor case that has a cylindrical shape;
a magnet rotor that has a circular cylindrical shape and is disposed inside the rotor case;
a valve member that moves in response to rotation of the magnet rotor; and
a stator that is disposed inside the magnet rotor and constitutes a motor together with the magnet rotor.
